# EUROPEAN PATENT APPLICATION

(11) **EP 3 835 241 A1**
(43) Date of publication of application: **16.06.2021**
(21) Application number: 20212626.4
(22) Date of filing: 09.12.2020
(51) Int. Cl.: B65G 59/10

(54) **MODULAR TRAY DISPENSING INSTALLATION**

(30) Priority: 10.12.2019 DK PA201970759
(71) Applicant: Carsoe A/S, 9220 Aalborg Ø (DK)
(72) Inventor: NÆSS-SCHMIDT, Steffen, 9310 Vodskov (DK); ANDERSEN, Thomas, 9430 Vadum (DK); SØRENSEN, Mattias, 9000 Aalborg (DK)
(74) Representative: Patrade A/S

(57) **Abstract**

Modular tray dispensing installation, comprising two separate units:
- A denester unit, comprising a through-going passage, suitable to guide a determined size of tray through the denester unit, and where dispensing means at least including a denester wheel is arranged in said passage for dispensing trays one by one from a stack of trays onto an underlying receiver;
- A tray storage unit comprising means for guiding and supporting a stack of trays towards the denesting unit;
- Interface means for connecting the denester unit to the tray storage unit.

## Description

### Field of the Invention

The present invention relates to a modular tray dispensing installation as well as a method for using such an installation.

### Background of the Invention

In the art of dispensing trays it is well-known to use a tray dispensing installation comprising a holder for a stack of trays which with the help of gravity is fed into a tray dispenser unit, often comprising a denester wheel, which will separate the lowermost tray from the stack of trays such that the lowermost tray may be pushed downwards onto a conveyor and eventually filled with products such as for example meat or vegetables or the like.

Trays shall be understood as very thin plastic or other lightweight material trays which are used for packaging of foodstuffs or other items. Often the trays are made from plastics, paper or aluminium in a suitable forming process.

In the art a multitude of sizes of trays are used such that for packaging of small items small trays are used and for larger items larger trays and for some types of produce it is advantageous to use shallow or deep trays.

All these different types of trays require a tray dispenser and a denesting unit which is designed for that specific type of tray such that the tray storage and the denester installation is designed to specifically handle a particular size and type of tray.

At the same time the tray dispensing installation is usually part of a large production line, and it may be a complicated process to exchange one tray dispensing installation for another tray dispensing installation when it is necessary to change the sizes of the trays and as such the personnel carrying out this job may be placed in difficult working positions requiring lifting of quite heavy equipment and at the same time be very careful not to damage the tray dispensing installation or the surrounding installation during the change from one tray size to another tray size.

### Object of the Invention

Consequently, it is the object of the present invention to provide a modular tray dispensing installation which addresses these drawbacks and provides a much smoother transition from one tray size to another tray size without undue burden for the personnel having to carry out the work.

### Description of the Invention

The invention addresses this by providing a modular tray dispensing installation comprising two separate units:
- A denester unit, comprising a through-going passage, suitable to guide a determined size of tray through the denester unit, and where dispensing means at least including a denester wheel is arranged in said passage for dispensing trays one by one from a stack of trays onto an underlying receiver;
- A tray storage unit comprising means for guiding and supporting a stack of trays towards the denesting unit;
- Interface means for connecting the denester unit to the tray storage unit.

By dividing the tray dispensing installation into two separate units, i.e. the denester unit and the tray storage unit, it is possible to remove one part or the other and thereby lighten the burden for personnel carrying out the work. At the same time, by providing the interface means, for example in the shape of a tap on one part fitting into a hole in the other part, the chances of assembling the two parts incorrectly are very limited, and at the same time a strong mechanical connection may be provided.

In a further advantageous embodiment of the invention a plurality of denester units is provided where each denester unit is provided with a different size through-going passage allowing different sizes of trays to be denested from each denester unit of the plurality of denester units.

Typically the denester units are very precisely calibrated to a certain tray size and as such by replacing the denester unit it is possible in a workshop to service and readjust the denester unit without removing the entire tray dispensing installation and at the same time for a number of types of trays the tray storage unit may be reused whereas the denester unit must be replaced.

In this manner an extra facility is provided by separating the tray dispensing installation into two separate parts in that it is only necessary in this embodiment to replace one of the units.

In a still further advantageous embodiment of the invention the trays storage unit comprises two parallel guide towers, where each tower is mounted on one or more orthogonal axles, such that the towers may be displaced towards each other or away from each other, and where each tower comprises means for supporting and engaging a stack of trays arranged between said towers, and where each tower in a distal end, which in use is in engagement with an upper surface of the denester unit, comprises means for engaging a top surface of said denester unit.

With this arrangement it becomes possible in situ to adjust the mutual distance between the two parallel guide towers and in this manner adapt the trays storage unit to a multitude of tray sizes such that only the denester unit as explained above needs to be replaced in that the denester unit does require a very precise engagement with the stack of trays in order to be able to dispense the lowermost tray in a fast and reliable manner.

As the two towers are mounted on one or more axles, i.e. the same axle going through both towers, it is ensured that the towers are always aligned and for example by providing markings on the axles it is very easy to adjust and fasten the towers in the correct position relative to the tray size which is to be dispensed and in this manner a very smooth transition from one tray size to another tray size may be accomplished.

In a still further advantageous embodiment of the invention each dispenser unit has an upper surface surrounding the through-going passage, and where in said upper surface is provided means for receiving the means in said distal end of the towers, such that the towers can only be engaged to the denester unit in one position, such that the mutual distance between the towers relating to a certain tray size corresponds to the through-going passage in the denester unit.

With the modular tray dispensing installation according to the invention as described above comprising a multitude of different denester units adapted to various tray sizes and the possibility to adjust the mutual distance between the guide towers it is important that once the two separate units are assembled into a tray dispensing installation the dimensions of the denester corresponds exactly to the dimension of the tray storage unit. This is in this embodiment created by providing unique interface means between the denester unit and the tray storage unit such that the denester unit's through-going passage allowing only one type of trays will be reflected in the mutual distance between the engagement means on the upper surface of the denester unit such that the guide towers may only be fastened to the denester unit in this particular position.

This again minimizes the risk of assembling the system with incorrect sizes and at the same time provides for only one unit having to be replaced, namely the denesting unit whereas the other unit, the tray storage unit, may be adjusted in situ without having to remove or lift parts.

The invention is also directed to a method of using a modular tray dispensing installation as described above where the method comprises the following steps:
a. determining the correct size of tray to be used;
b. selecting a denester unit from a plurality of denester units where the selected denester unit has a size of the through-going passage allowing the tray determined in step a. to be denested;
c. adjusting the mutual distance between the two parallel guide towers of the tray storage unit, where each tower is mounted on one or more orthogonal axles, such that the towers may be displaced towards each other or away from each other and thereby be adjusted to hold and support the correct size of trays, and where each tower comprises means for supporting and engaging a stack of trays arranged between said towers, and where each tower in a distal end, which in use is in engagement with an upper surface of the denester unit, comprises means for engaging a top surface of said denester unit;
d. connecting the denester unit to the tray storage unit by engaging the interface means.

With this method the advantages of the modular tray dispensing installation as already discussed above is achieved.

### Description of the Drawing

The invention will now be described with reference to the accompanying drawings wherein
- Figure 1: illustrates a tray dispensing installation
- Figure 2: illustrates an embodiment where the interface means comprises tabs
- Figure 3: illustrates a schematic cross-section through the tray storage unit and the denester unit

### Detailed Description of the Invention

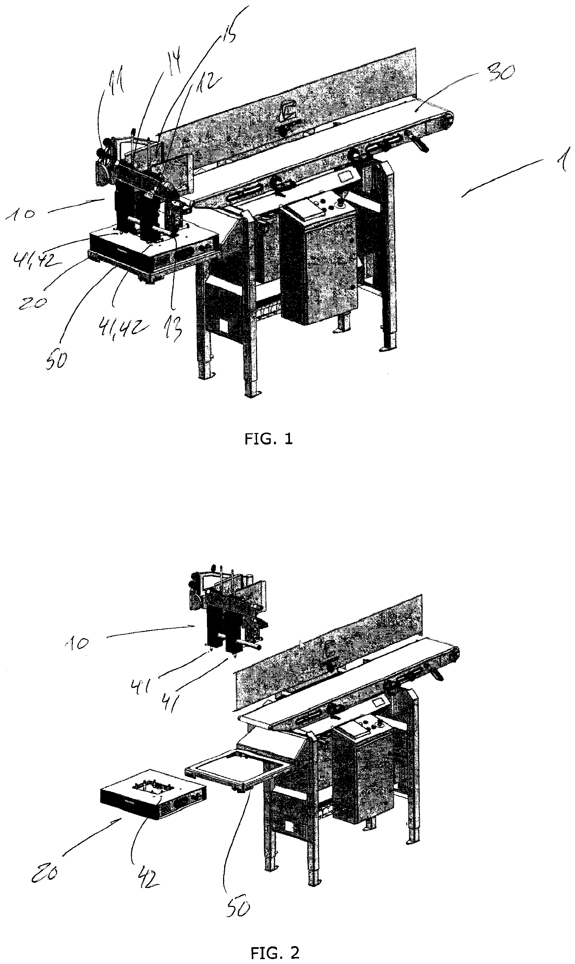

In figure 1 is illustrated a tray dispensing installation 1 comprising a tray storage unit 10 and a denester unit 20. Furthermore, at conveyor 30 is provided suitable to convey for example products to be packaged.

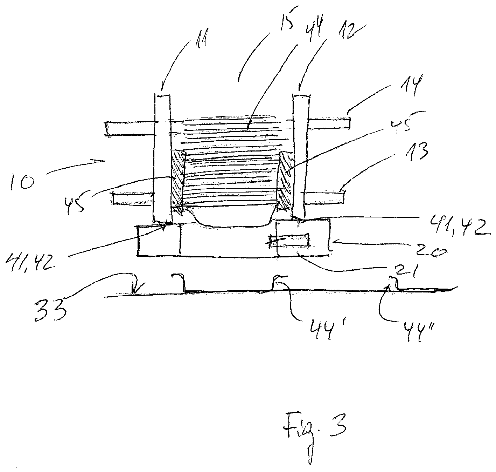

Between the tray storage unit 10 and the denester unit 20 is provided interface means 40. In this embodiment the interface means comprises tabs 41 (see figures 2 and 3) which tabs 41 are suitable to engage corresponding apertures 42 provided on an upper surface of the denester unit 20. In this manner the tray storage unit 10 can only be engaged with the denester unit 20 in one manner, i.e. by inserting the tabs 41 in the corresponding apertures 42.

The tray storage unit 10 comprises two guide towers 11, 12 arranged vertically and substantially parallel. Furthermore the guide towers 11, 12 have means for engaging and holding and slowly allowing the stack of trays to in an orderly manner move downwards towards the denesting unit.

The guide towers 11, 12 are furthermore arranged on common axles 13, 14 such that the mutual horizontal distance between the guide towers 11, 12 may be adjusted by sliding the guide towers along the substantially horizontal axel 13, 14. In this manner the guide towers 11, 12 are kept in a parallel relationship and at the same time the opening 15 in which the trays are maintained during the feeding to the denester unit 20 may be varied according to the tray's size such that one tray storage unit may be suitable to dispense a number of varying tray sizes due to the possibility of sliding the guide towers 11, 12 along the axles 13, 14 into an appropriate position in order to accomodate trays of a specific size.

It is clear that the denester unit 20 due to the very precise engagement between the denester wheel as will be explained with reference to figure 3 and the guidance through the denester unit 20 is very precise and therefore a denester unit is normally dimensioned to accommodate only one size of trays. Therefore, when a different size of trays is to be used with the installation illustrated in figure 1 the denester unit 20 has to be replaced. Once the correct denester unit 20 is mounted on the holding frame 50 adjustment of the guide towers such that the tabs 41 may engage the corresponding apertures 42 ensures that the correct size of the space 15 is provided allowing a different size of trays to be delivered by the tray storage unit 10 to the denesting unit 20.

The conveyor belt 30 is provided in order to feed fresh trays into the tray storage unit such that a substantially continuous dispensing of trays may be achieved by the trays dispensing installation 1.

Turning to figure 3 a schematic cross-section through the tray storage unit 10 and the denester unit 20 is illustrated.

The parallel guide towers 11, 12 are arranged on the axles 13, 14 such that the mutual distance between the guide towers 11, 12 may be adjusted by sliding the guide towers along the axles 13, 14. This adjustment will cause the space 15 to have different sizes thereby being able to accommodate various sized trays 44. In the tray storage unit 10 means 45 are provided for holding and allowing the trays 44 to slowly progress through the denester unit 20. The means 45 may for example be the means of the same applicant's prior patent application PA 2019 70110.

In the denester unit 20 is arranged a denester wheel 21 which will separate the lowermost tray from the stack of trays 44 such that a single tray 44' separated from the stack of trays 44 will be positioned on a conveyor 33 for further processing. For illustrative purposes a further tray 44" is illustrated which has already been dispensed from the installation 1 and is being transported for further processing.

Consequently, with this installation 1 it is possible to change the tray dispensation unit 10, 20 solely by replacing the denester unit 20 such that the denester unit which is specifically designed to a specific size of trays 44 is installed in the frame 50. Thereafter the guide towers 11, 12 are adjusted by sliding the towers along the axles 13, 14 until they engage with the specific engagement means, for example tabs and holes 41, 42.

In this manner each denester unit 20 only has holes 42 in the upper surface corresponding to a specific trays size such that the guide towers 11, 12 can only be engaged with the holes 42 in this specific position such that the trays 44 can be safely and correctly held and moved downwards towards the denester unit by the means 45.

The denester wheel 21 may for example be a denester wheel as disclosed in the same applicant's earlier patent application PA 2019 70756.

## Claims

1. Modular tray dispensing installation, comprising two separate units:
- A denester unit, comprising a through-going passage, suitable to guide a determined size of tray through the denester unit, and where dispensing means at least including a denester wheel is arranged in said passage for dispensing trays one by one from a stack of trays onto an underlying receiver;
- A tray storage unit comprising means for guiding and supporting a stack of trays towards the denesting unit;
- Interface means for connecting the denester unit to the tray storage unit.

2. Modular tray dispensing installation according to claim 1, comprising a plurality of denester units where each denester unit is provided with a different size through-going passage allowing different sizes of trays to be denested from each denester unit of the plurality of denester units.

3. Modular tray dispensing installation according to claim 1 or 2 where the tray storage unit comprises two parallel guide towers, where each tower is mounted on one or more orthogonal axles, such that the towers may be displaced towards each other or away from each other, and where each tower comprises means for supporting and engaging a stack of trays arranged between said towers, and where each tower in a distal end, which in use is in engagement with an upper surface of the denester unit, comprises means for engaging a top surface of said denester unit.

4. Modular tray dispensing installation according to claim 2 and 3 wherein each denester unit has an upper surface surrounding the through-going passage, and where in said upper surface is provided means for receiving the means in said distal end of the towers, such that the towers can only be engaged to the denester unit in one position, such that the mutual distance between the towers relating to a certain tray size corresponds to the through-going passage in the denester unit.

5. Method of dispensing trays onto a support surface using a modular tray dispensing installation according to any of claims 1 to 4 wherein the method comprises the following steps:
a. determining the correct size of tray to be used;
b. selecting a denester unit from a plurality of denester units where the selected denester unit has a size of the through-going passage allowing the tray determined in step a. to be denested ;
c. adjusting the mutual distance between the two parallel guide towers of the tray storage unit, where each tower is mounted on one or more orthogonal axles, such that the towers may be displaced towards each other or away from each other and thereby be adjusted to hold and support the correct size of trays, and where each tower comprises means for supporting and engaging a stack of trays arranged between said towers, and where each tower in a distal end, which in use is in engagement with an upper surface of the denester unit, comprises means for engaging a top surface of said denester unit;
d. connecting the denester unit to the tray storage unit by engaging the interface means.

6. Method according to claim 5 wherein step d. is performed prior to step c.
